# EUROPEAN PATENT APPLICATION

(11) **EP 4 821 630 A1**
(43) Date of publication of application: **14.10.2026**
(21) Application number: 24929138.6
(22) Date of filing: 21.08.2024
(51) Int. Cl.: B23K 26/21, B23K 26/70, B23K 26/16, B23K 26/142

(54) **LASER WELDING DEVICE AND LASER WELDING APPARATUS**

(30) Priority: 12.03.2024 CN 202420467435 U
(71) Applicant: Contemporary Amperex Technology Co., Limited, Ningde, Fujian 352100 (CN)
(72) Inventor: WANG, Tengteng, Ningde, Fujian 352100 (CN); YU, Xinglu, Ningde, Fujian 352100 (CN); QUE, Tianxiang, Ningde, Fujian 352100 (CN); PAN, Wensheng, Ningde, Fujian 352100 (CN)
(74) Representative: Ziebig Hengelhaupt Intellectual Property Attorneys Patentanwaltskanzlei PartGmbB
(86) International application number: PCT/CN2024/113767
(87) International publication number: WO 2025/189688

(57) **Abstract**

A laser welding device (100), comprising a galvanometer assembly (1) and an air knife assembly (2). The galvanometer assembly (1) is used for emitting a laser beam to perform laser welding on a workpiece in a welding area (10), and the galvanometer assembly (1) comprises a protective lens (11). The air knife assembly (2) is located between the galvanometer assembly (1) and the welding area (10), and the air knife assembly (2) comprises a first air knife (21) and a second air knife (22). An air outlet of the first air knife (21) faces the welding area (10), and an air outlet of the second air knife (22) faces the protective lens (11). According to the laser welding device (100), the motion trajectory of welding slag can be changed by means of the air knife assembly (2), the possibility that the welding slag is attached to the protective lens (11) is reduced, and the possibility that dust, fibers and other impurities in the air are attached to the protective lens (11) can be reduced, thereby improving the cleanliness of the protective lens and reducing the probability that the laser beam is shielded, and thus improving the welding quality. The present invention further relates to a laser welding apparatus (200).

## Description

### CROSS-REFERENCE TO RELATED APPLICATIONS

This application claims priority to Chinese Patent Application No. 202420467435.6 filed on March 12, 2024 and entitled "LASER WELDING DEVICE AND LASER WELDING APPARATUS", which is incorporated by reference in its entirety.

### TECHNICAL FIELD

The present disclosure relates to the technical field of manufacturing of batteries and in particular to, a laser welding device and a laser welding apparatus.

### BACKGROUND

New energy batteries are increasingly applied to life and industry. For example, new energy vehicles with batteries have been widely used. In addition, batteries are further increasingly applied to the field of energy storage.

Laser welding is an important process in battery production and manufacturing. During the laser welding, there is usually splashing of welding slag. In addition, there are impurities such as dust and fibers in the air. Therefore, how to reduce the adverse effects of the welding slag and the impurities is one of the research topics in the industry.

### SUMMARY

To solve the above technical problems, the present disclosure provides a laser welding device and a laser welding apparatus, in which, a protective lens is unlikely to be contaminated, the welding quality is good, and the reliability is high.

The present disclosure is achieved by the following technical solutions:

A first aspect of the present disclosure provides a laser welding device. The laser welding device includes a galvanometer assembly and an air knife assembly. The galvanometer assembly is configured to emit a laser beam to perform laser welding on a workpiece in a welding area. The galvanometer assembly includes a protective lens. The air knife assembly is located between the galvanometer assembly and the welding area. The air knife assembly includes a first air knife and a second air knife. An air outlet of the first air knife faces the welding area. An air outlet of the second air knife faces the protective lens.

Since the air knife assembly includes the first air knife, and the air outlet of the first air knife faces the welding area, welding slag generated by the welding can change its original splashing trajectory under the action of an air flow blown out from the first air knife and move away from the galvanometer assembly, thus reducing a possibility that the protective lens of the galvanometer assembly is contaminated due to the splashing of the welding slag to the protective lens. This reduces a possibility of occurrence of an adverse situation of insufficient welding energy because a laser beam emitted by the galvanometer assembly is blocked by the welding slag on the protective lens, and enhances the welding quality and the welding reliability.

Moreover, since the air knife assembly further includes the second air knife, and the air outlet of the second air knife faces the protective lens. Thus, an air flow blown out from the second air knife can blow away dust, fibers, and other impurities that may be attached to the protective lens. This further reduces the possibility that the protective lens is contaminated, enhances the cleanliness of the protective lens, and improves the welding quality.

In addition, since the air knife assembly can automatically play a role in welding-slag blocking and cleaning on the protective lens of the galvanometer assembly during the laser welding, there is no need to frequently stop a welding operation and manually clean the protective lens. Thus, this can effectively reduce the labor costs and enhance the production efficiency.

In some embodiments, the first air knife includes a first annular air outlet facing the welding area. The second air knife includes a second annular air outlet facing the protective lens.

Thus, the air flow blown out from the first air knife and/or the second air knife can form an annular air curtain, thereby forming an air curtain that covers the welding area in a circumferential direction and/or covers the entire protective lens. In this way, the first air knife can have a better reverse blowing effect on the splashing welding slag in the welding area, can also seal the welding slag as much as possible into the annular air curtain, and has better welding slag interception capability. This further reduces the possibility that the welding slag splashes to the protective lens and enhances the welding reliability. The second air knife can play a role in cleaning the entire protective lens and can also reduce the possibility that external dust and other impurities are attached to the protective lens through the annular air curtain. This further reduces the possibility that the protective lens is contaminated, achieves good dust removal, and ensures the welding quality.

In some embodiments, the first annular air outlet and the second annular air outlet are coaxially disposed in a first direction.

Thus, the first annular air outlet can directly face the welding area and the second annular air outlet can directly face the protective lens. Thus, this can better intercept the welding slag and achieve a better cleaning effect on the protective lens. In addition, this can also reduce a possibility of interference between the laser beam emitted by the galvanometer assembly and the air knife assembly, so that the laser beam can smoothly pass through the air knife assembly and reach the welding area, to perform a corresponding welding operation, and the welding reliability is enhanced.

In some embodiments, the first air knife includes a first annular portion. The first annular portion includes a first cavity and a second cavity that are communicated with each other. A plurality of first partition plates are disposed within the second cavity. The plurality of first partition plates divide the second cavity into a plurality of first air outlet channels. The second air knife includes a second annular portion. The second annular portion includes a third cavity and a fourth cavity that are communicated with each other. A plurality of second partition plates are disposed within the fourth cavity. The plurality of second partition plates divide the fourth cavity into a plurality of second air outlet channels.

Thus, by disposing the first partition plates within the second cavity of the first annular portion and disposing the second partition plates within the fourth cavity of the second annular portion, to respectively form the plurality of first air outlet channels and the plurality of second air outlet channels, the structure is simple, and the design is ingenious. By the plurality of first air outlet channels and the plurality of second air outlet channels, the air flows blown out from the first air knife and the second air knife can have a larger density, thus forming a denser air curtain. This can better block the splashing of the welding slag and reduce the possibility that the protective lens is contaminated.

In some embodiments, the plurality of first partition plates are spaced apart from each other and uniformly disposed in a circumferential direction of the second cavity; and/or the plurality of second partition plates are spaced apart from each other and uniformly disposed in a circumferential direction of the fourth cavity.

The first partition plates and the second partition plates that are spaced apart respectively in the circumferential direction of the second cavity and the circumferential direction of the fourth cavity can enable the plurality of first air outlet channels and the plurality of second air outlet channels to respectively form the first annular air outlet and the second annular air outlet, so that the air flow blown out from the air knife assembly can form the annular air curtain. In addition, due to the uniform arrangement of the first partition plates and the second partition plates, the air flows blown out from the first annular air outlet and the second annular air outlet can be distributed more uniformly.

In some embodiments, the plurality of first partition plates are disposed in a tilted manner in the same tilting direction; and/or the plurality of second partition plates are disposed in a tilted manner in the same tilting direction.

Thus, the air curtain formed by the air flows blown out from the first annular air outlet and the second annular air outlet is substantially conical, and a wind speed is highest at the focal point of the cone. This can better achieve a function of blocking the splashing of the welding slag and blowing away impurities.

In some embodiments, a first air inlet is formed in one side of the first annular portion facing away from the welding area, and the first air inlet is communicated with the first cavity and the second cavity. A second air inlet is formed in a peripheral side wall of the second annular portion, and the second air inlet is communicated with the third cavity and the fourth cavity.

Thus, gas can be introduced into the first annular portion of the first air knife and the second annular portion of the second air knife through the first air inlet and the second air inlet, thereby reducing the splashing of the welding slag and better cleaning the protective lens. In addition, the first air inlet is formed in the side of the first annular portion facing away from the welding area, and the second air inlet is formed in the peripheral side wall of the second annular portion, so that it is not easy for the air inlets to interfere with the air outlets when the air inlets are connected to an external gas supply device, and then this does not easily affect air outputting from the air outlets of the first air knife and the second air knife.

In some embodiments, a flow rate of gas generated by the first air knife is greater than a flow rate of gas generated by the second air knife.

Since the air outlet of the first air knife faces the welding area to block the splashing of the welding slag, the flow rate of the gas needing to be generated by the first air knife is relatively large. In this way, it can better block the splashing of the welding slag and reduce the possibility that the welding slag splashes to the protective lens. The second air knife faces the protective lens to blow away the dust and other impurities attached to the protective lens. Since the welding slag generated during welding can be well blocked by the first air knife, only a small amount of dust in the air may be attached to the protective lens. Due to a low attachment force between the dust and the protective lens, the dust can be blown away without a large air volume. Therefore, the flow rate of the gas generated by the second air knife can be appropriately reduced, thereby reducing the energy consumption, reducing the air consumption of the air knife assembly, and reducing the costs of consumables.

In some embodiments, the laser welding device includes at least one connection portion, and the connection portion is connected to the air knife assembly and the galvanometer assembly.

Thus, the air knife assembly can be stably connected to the galvanometer assembly through the connection portion, so that the structure is simple and the assembling is easy. Thus, during the welding performed by the laser welding device, the air knife assembly can reduce the possibility that the protective lens is contaminated because the welding slag splashes to the protective lens of the galvanometer assembly and the dust in the air is attached to the protective lens, reduce the possibility of occurrence of poor welding, cold welding, and other adverse situations in the laser welding device, and enhance the welding quality and the welding reliability.

In some embodiments, the laser welding device further includes a lighting assembly, and the lighting assembly is connected to one side of the air knife assembly facing the welding area in the first direction.

Thus, the welding area can be illuminated through the lighting assembly, so that clearer observation can be achieved during alignment of welding spots. In addition, the lighting assembly can further provide lighting during maintenance of the laser welding device. This is more convenient to perform a maintenance operation.

A second aspect of the present disclosure provides a laser welding apparatus. The laser welding apparatus includes: a positioning device configured to position a workpiece in a welding area; and the laser welding device according to the first aspect of the present disclosure. The laser welding device performs laser welding on the workpiece positioned in the welding area.

Since the laser welding device of the laser welding apparatus includes the air knife assembly having the first air knife and the second air knife, during laser welding on the workpiece in the welding area, the air knife assembly can effectively block a possibility that welding slag generated by welding splashes to the protective lens of the galvanometer assembly and can blow away dust attached to the protective lens. This further enhances the cleanliness of the protective lens, thus reducing a possibility of occurrence of an adverse situation such as poor welding or cold welding, and then enhancing the welding quality and the welding reliability.

The present disclosure provides the laser welding device and the laser welding apparatus, in which, the protective lens is unlikely to be contaminated, the welding quality is good, and the reliability is high.

### BRIEF DESCRIPTION OF THE DRAWINGS

Various other advantages and benefits will become apparent to those of ordinary skill in the art upon reading the following detailed description of the preferred implementations. The accompanying drawings are only for the purpose of illustrating preferred implementations and are not considered as a limitation on the present disclosure. Furthermore, the same components are denoted by the same reference numerals throughout the accompanying drawings. In the accompanying drawings:
FIG. 1 is a schematic diagram of a three-dimensional structure of a laser welding device according to some embodiments of the present disclosure;
FIG. 2 is a schematic diagram of a planar structure of a laser welding apparatus according to some embodiments of the present disclosure;
FIG. 3 is a schematic diagram of a three-dimensional structure of an air knife assembly, a connection portion, and a lighting assembly according to some embodiments of the present disclosure;
FIG. 4 is a cross-sectional diagram of the air knife assembly, the connection portion, and the lighting assembly that are provided in FIG. 3;
FIG. 5 is a partially enlarged view of part A of the air knife assembly provided in FIG. 3, where the dotted lines in the accompanying drawing illustrate a first air outlet channel; and
FIG. 6 is a partially enlarged view of part B of the air knife assembly provided in FIG. 3, illustrating a second air outlet channel.

### Descriptions of reference numerals:

1: galvanometer assembly; 11: protective lens; 12: galvanometer scanner head; 2: air knife assembly; 21: first air knife; 211: first annular air outlet; 22: second air knife; 221: second annular air outlet; 23: first annular portion; 231: first cavity; 232: second cavity; 2321: first partition plate; 2322: first air outlet channel; 233: first air inlet; 24: second annular portion; 241: third cavity; 242: fourth cavity; 2421: second partition plate; 2422: second air outlet channel; 243: second air inlet; 3: stand; 31: base; 32: transverse frame body; 33: longitudinal frame body; 4: connection portion; 5: lighting assembly; 51: mounting frame; 10: welding area; 100: laser welding device; 200: laser welding apparatus; and 201: positioning device.

### DETAILED DESCRIPTION

Embodiments of the technical solutions of the present disclosure will be described below in detail with reference to the accompanying drawings. The following embodiments are only used for illustrating the technical solutions of the present disclosure more explicitly, and are thus only interpreted as examples, rather than used to limit the protection scope of the present disclosure.

Unless otherwise defined, all technical and scientific terms used herein have the same meaning as commonly understood by those skilled in the art of the present disclosure. The terms used herein are intended only for the purpose of describing specific embodiments and are not intended to limit the present disclosure. The terms "include" and "has/have", as well as any variations thereof are intended to encompass non-exclusive inclusion.

In the description of the embodiments of the present disclosure, the technical terms "first", "second", "third", "fourth", and the like are only for distinguishing different objects, and may not be understood as indicating or implying the relative importance or implicitly indicating the number, specific order or primary and secondary relationships of the technical features indicated. In the description of the embodiments of the present disclosure, "plurality" means two or more, unless otherwise expressly and specifically defined.

Reference herein to "an embodiment" means that a particular feature, structure, or characteristic described in connection with the embodiment may be included in at least one embodiment of the present disclosure. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the descriptions of the embodiments of the present disclosure, the term "and/or" only describes an association relationship of associated objects and represents that three relations may exist. For example, A and/or B may represent three situations: A exists alone; A and B exist simultaneously; and B exists alone. In addition, the character "/" herein usually indicates an "or" relationship between associated objects.

In the description of the embodiments of the present disclosure, orientations or positional relationships indicated by the technical terms "length", "width", "thickness", "upper", "lower", "front", "rear", "left", "right", "vertical", "horizontal", "top", "bottom", "inner", "outer", "circumferential direction", and the like are orientations or positional relationships as shown in the accompanying drawings, and are only for the purpose of facilitating and simplifying the descriptions of the embodiments of the present disclosure instead of indicating or implying that devices or elements indicated need to have particular orientations, and be constructed, operated, or used in the particular orientations, so that these terms are not construed as limiting the embodiments of the present disclosure.

In the description of the embodiments of the present disclosure, unless otherwise expressly specified and defined, the technical terms "mount", "connected to", "connected with", "fixed", or the like should be interpreted in a broad sense. For example, a connection may refer to a fixed connection, a detachable connection or an integral connection; or may refer to a mechanical connection or an electrical connection; or may refer to a direct connection or an indirect connection through an intermediate medium; or may refer to an internal communication between two elements or an interaction relationship between two elements. For those of ordinary skill in the art, the specific meanings of the aforementioned terms in the embodiments of the present disclosure can be understood according to specific conditions.

In the description of the embodiments of the present disclosure, unless otherwise explicitly defined and limited, the technical term "contact" should be interpreted broadly. It may refer to direct contact or contact through an intermediate medium, or may refer to contact, with no interaction force, between two elements that are in contact with each other, or may refer to contact, with an interaction force, between two elements that are in contact with each other.

The present disclosure will be described in detail below.

At present, new energy batteries are increasingly applied to life and industry. The new energy batteries are used in energy storage power source systems such as hydraulic, thermal, wind, and solar power stations, and are widely applied to electric vehicles such as such as electric bicycles, electric motorcycles, electric automobiles, and many fields such as aerospace. With the continuous expansion of the application field of the power batteries, the market demand is also constantly increasing.

In a production and manufacturing process of batteries, laser welding has always been one of the more important procedures in a product production process. There are many workpieces that need to be welded. For example, tabs are welded with an adapter plate, the adapter plate is welded with a pole terminal of a top cover, and the pole terminal is welded with a busbar portion.

In a process of a laser welding operation, welding slag usually splashes. If the welding slag splashes to a protective lens of a galvanometer assembly, the high-temperature welding slag will be attached to or deposited on a surface of the protective lens. In this way, a laser beam emitted by the galvanometer assembly may be blocked by the welding slag on the protective lens. This can affect the transmittance of the laser beam and power outputting. As a result, the welding energy is insufficient, and the welding quality is even severely affected. Moreover, due to a high temperature of the welding slag, when too much welding slag is deposited on the protective lens, the protective lens may break due to excessive heat absorption, thus greatly increasing the costs of consumables and posing a high safety hazard. In addition, dust, fibers, and impurities in the air may possibly be attached to the protective lens, thereby affecting the welding quality to an extent.

In the related technology, a contamination degree of the protective lens is usually regularly observed, and the welding operation is stopped to manually clean the protective lens. However, it is extremely hard to clean the high-temperature welding slag after the surface of the protective lens is cooled. Improper cleaning can also damage the protective lens. Moreover, frequent cleaning on the protective lens greatly increases the labor costs, and reduces the production efficiency.

If the possibility that the welding slag, the dust, and other impurities are attached to the protective lens of the galvanometer assembly can be reduced, adverse effects of the welding slag, the dust, and the like on the welding operation can be reduced, and the time required for manual cleaning of the welding slag can be reduced or even eliminated.

For the problems in the above related technology, a laser welding device is provided. The laser welding device includes a galvanometer assembly and an air knife assembly. The galvanometer assembly is configured to emit a laser beam to perform laser welding on a workpiece in a welding area. The galvanometer assembly includes a protective lens. The air knife assembly is located between the galvanometer assembly and the welding area, and the air knife assembly includes a first air knife and a second air knife. An air outlet of the first air knife faces the welding area, and an air outlet of the second air knife faces the protective lens.

Since the air knife assembly includes the first air knife, and the air outlet of the first air knife faces the welding area, welding slag generated by the welding can change its original splashing trajectory under the action of an air flow blown out from the first air knife and move away from the galvanometer assembly, thus reducing a possibility that the protective lens of the galvanometer assembly is contaminated due to the splashing of the welding slag to the protective lens. This reduces a possibility of occurrence of an adverse situation of insufficient welding energy because a laser beam emitted by the galvanometer assembly is blocked by the welding slag on the protective lens, and enhances the welding quality and the welding reliability.

Moreover, since the air knife assembly further includes the second air knife, and the air outlet of the second air knife faces the protective lens. Thus, an air flow blown out from the second air knife can blow away dust and other impurities that may be attached to the protective lens. This further reduces the possibility that the protective lens is contaminated, enhances the cleanliness of the protective lens, and improves the welding quality.

In addition, since the air knife assembly can automatically play a role in welding-slag blocking and cleaning on the protective lens of the galvanometer assembly during the laser welding, there is no need to frequently stop a welding operation and manually clean the protective lens. This reduces a possibility that the protective lens is damaged and replaced due to improper cleaning, thus effectively reducing the costs of consumables, reducing the labor costs, and enhancing the production efficiency.

The laser welding device of this embodiment of the present disclosure can be used in a production process of a battery, for example, welding an adapter plate of a bare battery cell with a pole terminal of a top cover. Certainly, those skilled in the art should understand that the laser welding device provided in this embodiment of the present disclosure is not only configured to weld the adapter plate of the bare battery cell with the pole terminal of the top cover in the production and manufacturing process of the battery, but also configured to weld other workpieces to be welded of other production lines.

In this embodiment of the present disclosure, the battery can be a battery cell.

The battery cell refers to a unit that can achieve mutual conversion between chemical energy and electrical energy, and may be configured to make a battery module or a battery pack to supply power to an electrical apparatus.

The battery cell may be a secondary battery. The secondary battery refers to a battery cell that can be used continually by activating an active material in a charging manner after the battery cell is discharged.

The battery cell may be a lithium-ion battery, a sodium-ion battery, a sodium/lithium-ion battery, a lithium metal battery, a sodium metal battery, a lithium sulfur battery, a magnesium-ion battery, a nickel hydrogen battery, a nickel cadmium battery, a lead storage battery, and the like. The embodiments of the present disclosure are not limited to this.

The battery cell generally includes an electrode assembly. The electrode assembly includes a positive electrode, a negative electrode, and a separator. During charging and discharging of the battery cell, active ions (e.g. lithium ions) are intercalated and deintercalated back and forth between the positive electrode and the negative electrode. The separator is arranged between the positive electrode and the negative electrode, and can function to prevent short circuit between the positive electrode and the negative electrode and allow the active ions to pass through.

In some embodiments, the battery cell further includes an electrolyte. The electrolyte plays a role of conducting ions between the positive electrode and the negative electrode. A type of the electrolyte is not specifically limited in the present disclosure, and may be selected according to requirements. For example, the electrolyte may be liquid, in a gel state, or in a solid state.

In some embodiments, the battery cell may include a shell. The shell is configured to encapsulate components, such as the electrode assembly and electrolyte. The shell may be a steel shell, an aluminum shell, a plastic shell (such as polypropylene), a composite metal shell (such as a copper-aluminum composite shell), an aluminum-plastic film, or the like.

For example, the battery cell may be a cylindrical battery cell, a prismatic battery cell, a pouch cell, or a battery cell in another shape. The prismatic battery cell includes a square-shell battery cell, a blade-shaped battery cell, and a multi-prism battery. For example, the multi-prism battery may be a hexagonal prism battery. The present disclosure has no special limitation.

In some embodiments, the shell includes an end cover and a case. The case is provided with an opening, and the end cover closes the opening to form a closed space for accommodating substances such as the electrode assembly and the electrolyte. The case may be provided with one or a plurality of openings. One or more end covers can be provided.

In some embodiments, the shell is provided with at least one electrode terminal, and the electrode terminal is electrically connected to a tab. The electrode terminal may be directly connected to the tab, or may be indirectly connected to the tab through an adapter plate. The electrode terminal may be arranged on the end cover, or may be arranged on the case.

In some embodiments, the shell is provided with a pressure relief mechanism. The pressure relief mechanism is configured to relieve pressure inside the battery cell.

In this embodiment of the present disclosure, the battery may be a single physical module including one or a plurality of battery cells to provide a higher voltage and capacity. When a plurality of battery cells are included, the plurality of battery cells are connected by series connection, or parallel connection, or parallel-series connection through a busbar component.

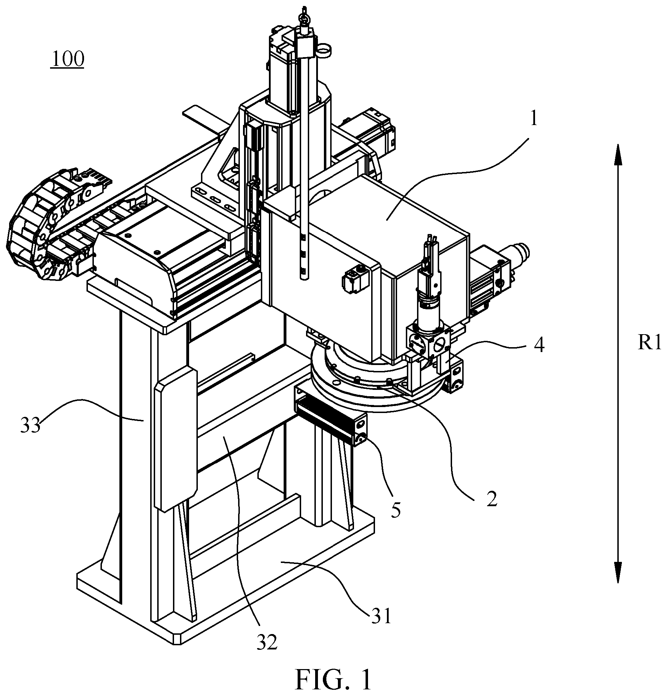

Some embodiments of the present disclosure will be described in detail below with reference to FIG. 1 to FIG. 6.

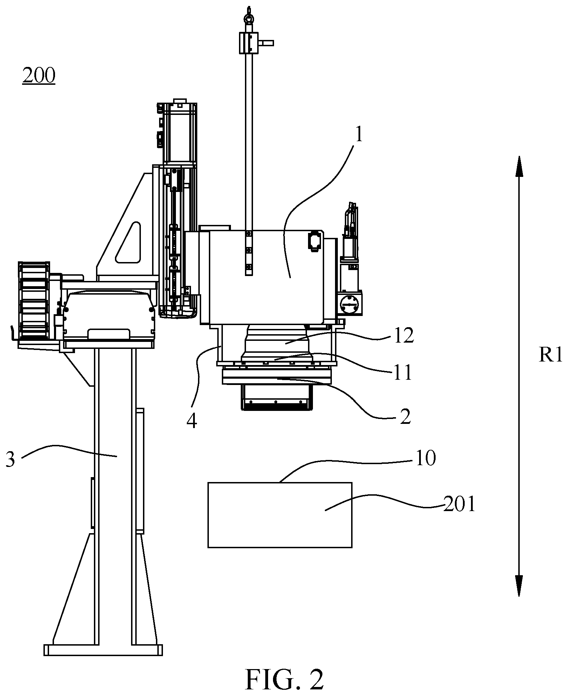

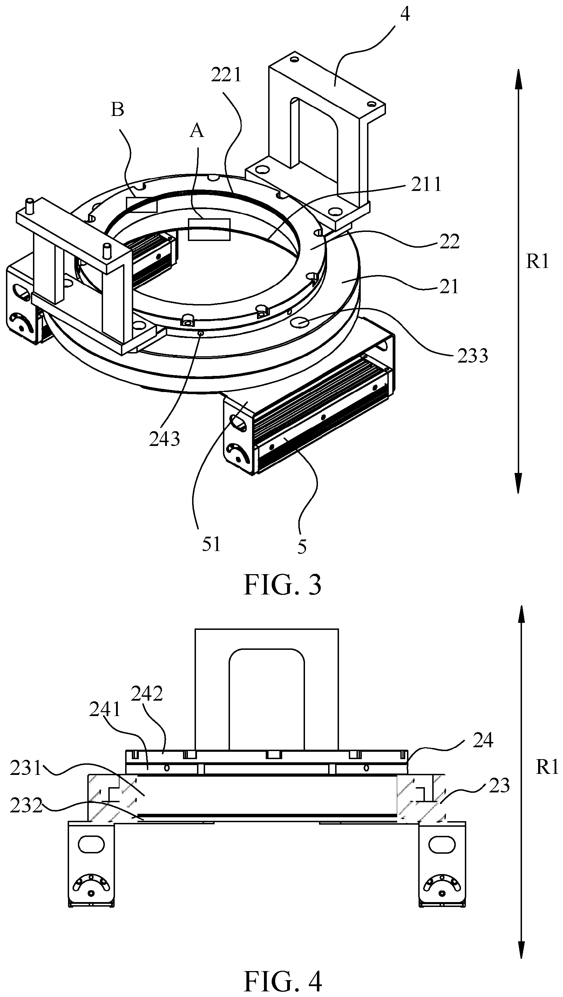

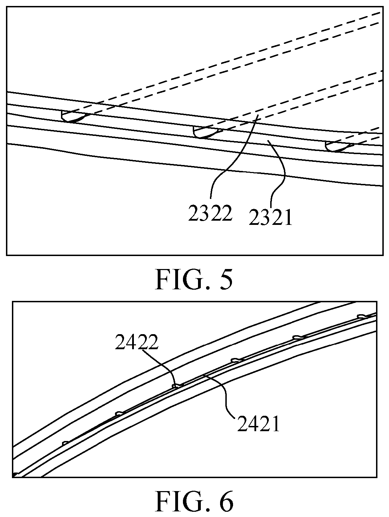

FIG. 1 is a schematic diagram of a three-dimensional structure of a laser welding device according to some embodiments of the present disclosure. FIG. 2 is a schematic diagram of a planar structure of a laser welding apparatus according to some embodiments of the present disclosure. FIG. 3 is a schematic diagram of a three-dimensional structure of an air knife assembly, a connection portion, and a lighting assembly according to some embodiments of the present disclosure. FIG. 4 is a cross-sectional diagram of the air knife assembly, the connection portion, and the lighting assembly that are provided in FIG. 3. FIG. 5 is a partially enlarged view of part A of the air knife assembly provided in FIG. 3, where the dotted lines in the accompanying drawing illustrate a first air outlet channel. FIG. 6 is a partially enlarged view of part B of the air knife assembly provided in FIG. 3, illustrating a second air outlet channel.

In some embodiments of the present disclosure, for ease of description, a first direction is set. As shown in FIG. 1 to FIG. 4, a direction in which the arrow R1 is located is the first direction.

As shown in FIG. 1 to FIG. 3, a first aspect of the present disclosure provides a laser welding device 100. The laser welding device includes a galvanometer assembly 1 and an air knife assembly 2. The galvanometer assembly 1 is configured to emit a laser beam to perform laser welding on a workpiece in a welding area 10, and the galvanometer assembly 1 includes a protective lens 11. The air knife assembly 2 is located between the galvanometer assembly 1 and a welding area 10. The air knife assembly 2 includes a first air knife 21 and a second air knife 22. An air outlet of the first air knife 21 faces the welding area 10, and an air outlet of the second air knife 22 faces the protective lens 11.

The laser welding device 100 can emit a high-energy-density laser beam to weld a portion to be welded of a workpiece through thermal conduction. Laser welding has a high welding speed and high precision.

The laser welding device 100 includes a stand 3. The stand 3 is of a frame structure formed by combining a base 31, a plurality of transverse frame bodies 32, and a plurality of longitudinal frame bodies 33, and is configured to carry various functional components that achieve functions of the laser welding device 100. This embodiment of the present disclosure does not impose a specific limitation on a combination manner for the transverse frame bodies 32 and the longitudinal frame bodies 33, as long as the stand can stably carry the various functional components of the laser welding device 100.

The laser welding device 100 includes the galvanometer assembly 1. The galvanometer assembly 1 is mounted on the stand 3. The galvanometer assembly 1 includes a galvanometer scanner head 12 and the protective lens 11. The galvanometer scanner head 12 is a rotating body using an axis parallel to the first direction as a center, and is internally provided with a laser emitting element for emitting a laser beam. An end portion of the galvanometer scanner head 12 facing the welding area 10 in the first direction is a laser exit end. The protective lens 11 covers the laser exit end to protect the laser emitting element inside the galvanometer scanner head 12.

In a process of a laser welding operation, welding slag usually splashes. If the welding slag splashes to the protective lens 11 of the galvanometer assembly 1, the welding slag will be deposited on a surface of the protective lens 11, thus blocking the laser exit end of the galvanometer scanner head 12 and affecting the transmittance of the laser beam and power outputting. As a result, the welding energy is insufficient, and then poor welding, cold welding, or other adverse situations may occur. This severely affects the welding quality.

Moreover, due to a high temperature of the welding slag, when too much welding slag is deposited on the protective lens 11, the protective lens 11 may break due to excessive heat absorption, so that the laser emitting element inside the galvanometer scanner head 12 and other components may be damaged. This greatly increases the costs of consumables and poses a high safety hazard.

In the related technology, a contamination degree of the protective lens is usually regularly observed, and the welding operation is stopped to manually clean the protective lens. However, it is extremely hard to clean the high-temperature welding slag after the surface of the protective lens is cooled. Improper cleaning can also damage the protective lens. Moreover, frequent cleaning on the protective lens greatly increases the labor costs, and reduces the production efficiency.

Therefore, the laser welding device 100 of this embodiment of the present disclosure includes the air knife assembly 2. The air knife assembly 2 is located between the galvanometer assembly 1 and the welding area 10. The air knife assembly 2 includes the first air knife 21. The air outlet of the first air knife 21 faces the welding area 10.

The first air knife 21 can generate a high-speed air flow. Thus, the welding slag generated by the welding can change its original splashing trajectory under the action of an air flow blown out from the first air knife 21 and move away from the galvanometer assembly 1, thus reducing a possibility that the protective lens 11 of the galvanometer assembly 1 is contaminated or damaged due to the splashing of the welding slag to the protective lens 11. This reduces a possibility of occurrence of an adverse situation of insufficient welding energy because a laser beam emitted by the galvanometer assembly 1 is blocked by the welding slag on the protective lens 11, and enhances the welding quality and the welding reliability. Moreover, this can reduce the number of shutdowns and the number of instances of manual cleaning on the protective lens 11, reduces the labor costs, and enhances the production efficiency.

In addition to the welding slag generated during the welding, which may be attached to the protective lens 11, there may be impurities such as dust, particles, and fibers in an air environment of a factory and a production line. These impurities may be attached to the protective lens 11 of the galvanometer assembly 1. Too many impurities also have an impact on the penetration of the laser beam and affect the welding quality.

Therefore, the air knife assembly 2 of this embodiment of the present disclosure further includes the second air knife 22, and the air outlet of the second air knife 22 faces the protective lens 11. The second air knife 22 can also generate a high-speed air flow. Thus, the air flow blown out from the second air knife 22 can blow away dust and other impurities that may be attached to the protective lens 11. This further reduces the possibility that the protective lens 11 is contaminated, enhances the cleanliness of the protective lens 11, and improves the welding quality.

The air knife assembly 2 of this embodiment of the present disclosure can automatically play a role in welding-slag blocking and cleaning on the protective lens 11 of the galvanometer assembly 1 during the welding of the laser welding device 100. Thus, there is no need to frequently stop a welding operation and manually clean the protective lens 11. This can effectively reduce the labor costs and enhance the production efficiency. This can also reduce the possibility that the protective lens 11 is damaged, so that the costs of consumables are reduced.

In some embodiments of the present disclosure, the first air knife 21 includes a first annular air outlet 211 facing the welding area 10. The second air knife 22 includes a second annular air outlet 221 facing the protective lens 11.

Specifically, as shown in FIG. 3, in this embodiment of the present disclosure, the first air knife 21 and the second air knife 22 are substantially circular-ring-shaped. The first air knife 21 includes a first annular air outlet 211, and the second air knife 22 includes a second annular air outlet 221. Thus, the air flows blown out from the first air knife 21 and the second air knife 22 can form an air curtain with a circular-ring-shaped cross section.

In this way, the air flow blown out from the first air knife 21 can form an annular air curtain that covers the welding area 10 in a circumferential direction, so that a better reverse blowing effect can be achieved on the splashing welding slag in the welding area 10. In addition, the welding slag can be sealed as much as possible into the annular air curtain, and a better welding slag interception capability is achieved. This further reduces the possibility that the welding slag splashes to the protective lens 11 and enhances the welding reliability.

Furthermore, in this embodiment of the present disclosure, the galvanometer scanner head 12 of the galvanometer assembly 1 is substantially an annular rotating body. The protective lens 11 is substantially circular. In this way, the air flow blown out from the second annular air outlet 221 of the second air knife 22 can form an annular air curtain that covers the entire circular protective lens 11, so that a role in cleaning the entire protective lens 11 can be played, and the possibility that external dust and other impurities are attached to the protective lens 11 through the annular air curtain can also be reduced. This further reduces the possibility that the protective lens 11 is contaminated, achieves good dust removal, and ensures the welding quality.

Certainly, those skilled in the art should understand that in some other embodiments, when the protective lens 11 is square, the air outlets of the first air knife 21 and/or the second air knife 22 may be square-ring-shaped. In addition, the first air knife 21 and the second air knife 22 may further include strip-shaped air outlets. This embodiment of the present disclosure does not impose a specific limitation on the shapes of the air outlets of the first air knife 21 and the second air knife 22, but specifically set the shapes according to an actual situation.

In addition, the shapes of the air outlets of the first air knife 21 and the second air knife 22 can be the same or different.

For example, the first air knife 21 may include the first annular air outlet 211, and the second air knife 22 may include the second annular air outlet 221.

For another example, the first air knife 21 may include the first annular air outlet 211, and the second air knife 22 may include the strip-shaped air outlet.

For still another example, the first air knife 21 may include the strip-shaped air outlet, and the second air knife 22 may include the second annular air outlet 221.

In some embodiments of the present disclosure, the first annular air outlet 211 and the second annular air outlet 221 are coaxially disposed in a first direction.

Thus, the first annular air outlet 211 can directly face the welding area 10 and the second annular air outlet 221 can directly face the protective lens 11. Thus, this can better intercept the welding slag and achieve a better cleaning effect on the protective lens 11.

In addition, this can also reduce a possibility of interference between the laser beam emitted by the galvanometer assembly 1 and the air knife assembly 2, so that the laser beam can smoothly pass through the air knife assembly 2 and reach the welding area 10, to perform a corresponding welding operation, and the welding reliability is enhanced.

A specific structure of the air knife assembly 2 will be further described in detail below with reference to the accompanying drawings.

In some embodiments of the present disclosure, as shown in FIG. 4 to FIG. 6, the first air knife 21 includes a first annular portion 23. The first annular portion 23 includes a first cavity 231 and a second cavity 232 that are communicated with each other. A plurality of first partition plates 2321 are disposed within the second cavity 232. The plurality of first partition plates 2321 divide the second cavity 232 into a plurality of first air outlet channels 2322. The second air knife 22 includes a second annular portion 24. The second annular portion 24 includes a third cavity 241 and a fourth cavity 242 that are communicated with each other. A plurality of second partition plates 2421 are disposed within the fourth cavity 242. The plurality of second partition plates 2421 divide the fourth cavity 242 into a plurality of second air outlet channels 2422.

In this embodiment of the present disclosure, the first annular portion 23 and the second annular portion 24 are substantially circular-ring-shaped, and a diameter of the first annular portion 23 is greater than a diameter of the second annular portion 24. In this way, while functions of the air knife assembly 2 for blocking the welding slag and cleaning the protective lens 11 are achieved, sizes of parts can be reduced as much as possible, the space utilization rate is increased, and the production costs are reduced.

For example, the first annular portion 23 and the second annular portion 24 are connected together in a detachable mounting manner. This facilitates the replacement and maintenance of subsequent parts.

For another example, the first annular portion 23 and the second annular portion 24 can be securely connected together. This enhances the connection stability.

Certainly, those skilled in the art should understand that this embodiment of the present disclosure does not specifically limit sizes, shapes, and connection manners of the first annular portion 23 and the second annular portion 24. In some other embodiments, the diameter of the first annular portion 23 may be the same as the diameter of the second annular portion 24, or the diameter of the first annular portion 23 may be less than the diameter of the second annular portion 24. This can be specifically set based on an actual application scenario and function of the air knife assembly 2.

Cavities for accommodating gas are formed inside the first annular portion 23 and the second annular portion 24. Gas flowing into the first cavity 231 and the second cavity 232 of the first annular portion 23, and into the third cavity 241 and the fourth cavity 242 of the second annular portion 24, includes but is not limited to inert gas, clean air, and the like, and can be specifically set based on an actual usage situation. The gas flowing into the cavities inside the first annular portion 23 and the second annular portion 24 can be released at a high speed through a plurality of first air outlet channels 2322 and a plurality of second air outlet channels 2422 based on the Coanda principle, thereby forming the stable air curtain to block the splashing of the welding slag and clean the protective lens 11.

For example, the first annular portion 23 and the second annular portion 24 can be driven by a device such as a turbo fan or high-pressure centrifugal fans to compress and divert surrounding air or gas from a gas supply device into the cavities inside the first annular portion 23 and the second annular portion 24, and then be blown out from the first air outlet channel 2322 and the second air outlet channel 2422.

Specifically, as shown in FIG. 5, a plurality of first partition plates 2321 are disposed within the second cavity 232. The plurality of first partition plates 2321 divide the second cavity 232 into a plurality of first air outlet channels 2322. The plurality of first air outlet channels 2322 jointly define the air outlet of the first air knife 21. In this embodiment of the present disclosure, two ends of each first partition plate 2321 in a circumferential direction of the second cavity 232 are substantially arc-shaped, so that a cross section of the first air outlet channel 2322 is substantially circular.

Certainly, those skilled in the art should understand that in some other embodiments, two ends of each first partition plate 2321 in the circumferential direction of the first annular portion 23 may be in another shape, so that a cross section of the first air outlet channel 2322 can be in another suitable shape such as a square and a semicircle. This embodiment of the present disclosure does not impose a specific limitation on this.

Similarly, as shown in FIG. 6, a plurality of second partition plates 2421 are disposed within the fourth cavity 242. The plurality of second partition plates 2421 divide the fourth cavity 242 into a plurality of second air outlet channels 2422. The plurality of second air outlet channels 2422 jointly define the air outlet of the second air knife 22. In this embodiment of the present disclosure, two ends of each second partition plate 2421 in a circumferential direction of the fourth cavity 242 are substantially arc-shaped, so that a cross section of the second air outlet channel 2422 is substantially circular.

Certainly, those skilled in the art should understand that in some other embodiments, two ends of each second partition plate 2421 in the circumferential direction of the second annular portion 24 may be in another shape, so that a cross section of the second air outlet channel 2422 can be in another suitable shape such as a square and a semicircle. This embodiment of the present disclosure does not impose a specific limitation on this.

Thus, the first partition plates 2321 are disposed within the second cavity 232 of the first annular portion 23 and the second partition plates 2421 are disposed within the fourth cavity 242 of the second annular portion 24, to respectively form the plurality of first air outlet channels 2322 and the plurality of second air outlet channels 2422, thus forming the air outlet of the first air knife 21 and the air outlet of the second air knife 22, and achieving a simple structure and ingenious design.

By the plurality of first air outlet channels 2322 and the plurality of second air outlet channels 2422, the air flows blown out from the first air knife 21 and the second air knife 22 can have a larger density, thus forming a denser air curtain. This can better block the splashing of the welding slag and more effectively reduce the possibility that the protective lens 11 is contaminated.

This embodiment of the present disclosure does not impose a specific limitation on the number of first air outlet channels 2322 and the number of second air outlet channels 2422, and can set the numbers based on actual sizes of the first annular portion 23 and the second annular portion 24.

In addition, this embodiment of the present disclosure does not impose a specific limitation on a formation manner of the first air outlet channels 2322 and the second air outlet channels 2422. The first air outlet channels 2322 and the second air outlet channels 2422 can be formed by any other suitable manner.

In some embodiments of the present disclosure, the plurality of first partition plates 2321 are spaced apart from each other and uniformly disposed in a circumferential direction of the second cavity 232; and/or the plurality of second partition plates 2421 are spaced apart from each other and uniformly disposed in a circumferential direction of the fourth cavity 242.

Thus, the first partition plates 2321 spaced apart from each other in the circumferential direction of the second cavity 232 can enable the plurality of first air outlet channels 2322 to form the first annular air outlet 211, and the second partition plates 2421 spaced apart from each other in the circumferential direction of the fourth cavity 242 can enable the plurality of second air outlet channels 2422 to form the second annular air outlet 221, so that the air flow blown out from the air knife assembly 2 can form an annular air curtain, to better block the welding slag and better clean the protective lens 11.

In addition, due to the uniform arrangement of the first partition plates 2321 and the second partition plates 2421, the air flows blown out from the first annular air outlet 211 and the second annular air outlet 221 can be distributed more uniformly.

In some embodiments of the present disclosure, the plurality of first partition plates 2321 are disposed in a tilted manner in the same tilting direction; and/or the plurality of second partition plates 2421 are disposed in a tilted manner in the same tilting direction.

In addition, the tilting direction includes a direction that tilts relative to both an axial direction and a radial direction.

In some embodiments, the plurality of first air outlet channels 2322 defined by the plurality of first partition plates 2321 that are disposed in the tilted manner in the same tilting direction can tilt relative to tangential directions of edges of positions at which air outlets of the first air outlet channels are located. That is, an air outlet and air inlet of each first air outlet channel 2322 are staggered from each other in the circumferential direction. Similarly, the plurality of second air outlet channels 2422 defined by the plurality of second partition plates 2421 that are disposed in the tilted manner in the same tilting direction can tilt relative to tangential directions of edges of positions at which air outlets of the second air outlet channels are located. That is, an air outlet and air inlet of each second air outlet channel 2422 are staggered from each other in the circumferential direction. Thus, the air curtain formed by the air flows blown out from the first annular air outlet 211 and the second annular air outlet 221 is substantially conical, and a wind speed is highest at the focal point of the cone. The first air knife 21 can better achieve a function of blocking the splashing of the welding slag, and the second air knife 22 can better blow away the dust and impurities on the protective lens 11.

In some embodiments of the present disclosure, as shown in FIG. 3, a first air inlet 233 is formed in one side of the first annular portion 23 facing away from the welding area 10, and the first air inlet 233 is communicated with the first cavity 231 and the second cavity 232. A second air inlet 243 is formed in a peripheral side wall of the second annular portion 24, and the second air inlet 243 is communicated with the third cavity 241 and the fourth cavity 242.

Thus, gas such as clean air can be introduced into the first annular portion 23 of the first air knife 21 and the second annular portion 24 of the second air knife 22 through the first air inlet 233 and the second air inlet 243, thereby reducing the splashing of the welding slag and better cleaning the protective lens 11.

In addition, the first air inlet 233 is formed in the side of the first annular portion 23 facing away from the welding area 10, and the second air inlet 243 is formed in the peripheral side wall of the second annular portion 24. In this way, it is not easy for the first air inlet 233 and the second air inlet 243 to interfere with the air outlets of the first air knife 21 and the second air knife 22 when the air inlets are connected to an external gas supply device, and then this does not easily affect air outputting from the air outlets of the first air knife 21 and the second air knife 22.

For example, a plurality of first air inlets 233 may be formed. The plurality of first air inlets 233 are spaced apart in the circumferential direction of the first annular portion 23. A plurality of second air inlets 243 may be formed as well. The plurality of second air inlets 243 are spaced apart from each other in the circumferential direction of the second annular portion 24. Thus, this can cause gas to enter the cavities inside the first annular portion 23 and the second annular portion 24 more quickly.

Certainly, this embodiment of the present disclosure does not impose a specific limitation on the number of first air inlets 233 and the number of second air inlets 243, and can specifically set the numbers according to an actual situation.

In addition, this embodiment of the present disclosure does not impose a specific limitation on positions of the first air inlet 233 and the second air inlet 243. The first air inlet 233 may be arranged at any other suitable position on the first annular portion 23, and the second air inlet 243 may be arranged at any other suitable position on the second annular portion 24.

In some embodiments of the present disclosure, a flow rate of gas generated by the first air knife 21 is greater than a flow rate of gas generated by the second air knife 22.

Since the air outlet of the first air knife 21 faces the welding area 10 to block the splashing of the welding slag, the flow rate of the gas needing to be generated by the first air knife 21 is relatively large. In this way, it can better block the splashing of the welding slag and reduce the possibility that the welding slag splashes to the protective lens 11.

The second air knife 22 faces the protective lens 11 to blow away the dust and other impurities attached to the protective lens 11. Since the welding slag generated during welding can be well blocked by the first air knife 21, only a small amount of dust in the air may be attached to the protective lens 11. Due to a low attachment force between the dust and the protective lens 11, the dust can be blown away without a large air volume. Therefore, the flow rate of the gas generated by the second air knife 22 can be appropriately reduced, thereby reducing the energy consumption, reducing the air consumption of the air knife assembly 2, and reducing the costs of consumables.

Certainly, those skilled in the art should understand that during laser welding, the flow rate of gas of the first air knife 21 and the flow rate of gas of the second air knife 22 can be adjusted at any time according to an actual situation.

In some embodiments of the present disclosure, the laser welding device 100 includes at least one connection portion 4, and the connection portion 4 is connected to the air knife assembly 2 and the galvanometer assembly 1.

For example, the air knife assembly 2 is detachably connected to the galvanometer assembly 1 through the connection portion 4.

For another example, the air knife assembly 2 is securely connected to the galvanometer assembly 1 through the connection portion 4.

Thus, the air knife assembly 2 can be stably connected to the galvanometer assembly 1 through the connection portion 4, so that the structure is simple and the assembling is easy. Therefore, during the welding performed by the laser welding device 100, the possibility that the protective lens 11 is contaminated because the welding slag splashes to the protective lens 11 of the galvanometer assembly 1 and the dust in the air is attached to the protective lens 11 is reduced, the possibility of occurrence of poor welding, cold welding, and other adverse situations in the laser welding device 100 is reduced, and the welding quality and the welding reliability are enhanced.

For example, two connection portions 4 can be included. The two connection portions 4 are symmetrically arranged on one side of the air knife assembly 2 facing away from the welding area 10 in the first direction. In this way, the connection between the air knife assembly 2 and the galvanometer assembly 1 can be more reliable and more stable.

Certainly, those skilled in the art should understand that this embodiment of the present disclosure does not impose a specific limitation on the number of connection portions 4, and can set the number according to an actual situation.

In some embodiments of the present disclosure, the laser welding device 100 further includes a lighting assembly 5, and the lighting assembly 5 is connected to one side of the air knife assembly 2 facing the welding area 10 in the first direction.

The lighting assembly 5 includes but is not limited to a lamp.

The lighting assembly 5 may be, for example, connected to the air knife assembly 2 through a mounting frame 51. Thus, the welding area 10 can be illuminated through the lighting assembly 5, so that clearer observation can be achieved during alignment of welding spots, and the alignment accuracy can be enhanced.

In addition, the lighting assembly 5 can further provide lighting during maintenance of the laser welding device 100. This is more convenient to perform a maintenance operation.

In this embodiment of the present disclosure, two lighting assemblies 5 are included. The two lighting assemblies 5 are symmetrically arranged on the side of the air knife assembly 2 facing the welding area 10 in the first direction, thus providing a larger lighting range.

In some other embodiments, there may be one or more (more than two) lighting assemblies 5. This embodiment of the present disclosure does not impose a specific limitation on the number of lighting assemblies 5.

A second aspect of the present disclosure provides a laser welding apparatus 200. As shown in FIG. 2, the laser welding apparatus 200 includes a positioning device 201 and the laser welding device 100 described according to the first aspect of the present disclosure. The positioning device 201 is configured to position a workpiece in a welding area 10. The laser welding device 100 performs laser welding on the workpiece positioned in the welding area 10.

The positioning device 201 is configured to position a workpiece to be welded, so that the workpiece to be welded cannot move relative to the laser welding apparatus 200 in a welding process, and portions to be welded of the workpiece to be welded cannot move relative to each other in the welding process. It is more conducive for a welding operation and to enhancing the welding stability.

For example, the workpiece to be welded can be grasped and placed at the positioning device 201 of the laser welding apparatus 200 through a grasping device such as a robotic arm, thereby achieving good positioning and clamping.

In addition, since the laser welding device 100 of the laser welding apparatus 200 includes the air knife assembly 2 having the first air knife 21 and the second air knife 22, during laser welding on the workpiece in the welding area 10, the air knife assembly 2 can effectively block a possibility that welding slag generated by welding splashes to the protective lens 11 of the galvanometer assembly 1 and can blow away dust or other impurities attached to the protective lens 11. This further enhances the cleanliness of the protective lens 11, thus reducing a possibility of occurrence of an adverse situation such as poor welding or cold welding, and then enhancing the welding quality and the welding reliability.

Specific examples of some embodiments of the present disclosure will be described below with reference to the accompanying drawings.

In a specific example, a galvanometer welding mechanism (the laser welding device 100) includes a galvanometer (the galvanometer assembly 1) and an air knife (the air knife assembly 2). The air knife is located directly below the galvanometer. The air knife is an annular air knife, and includes an upper annular air knife (the second air knife 22) and a lower annular air knife (the first air knife 21). A diameter of the upper annular air knife is less than a diameter of the lower annular air knife, and a flow rate and velocity of gas generated by the upper annular air knife are less than a flow rate and velocity of gas generated by the lower annular air knife.

A center of the upper annular air knife directly faces a protective lens 11 of the galvanometer, and a center of the lower annular air knife directly faces a welding area 10. A function of the upper annular air knife is to blow away floating dust and foreign objects on the protective lens, and a function of the lower annular air knife is to prevent welding slag from splashing to the galvanometer.

Gaps (the first air outlet channel 2322 and the second air outlet channel 2422) within a range of 0.01 mm to 0.2 mm are formed inside the upper annular air knife and the lower annular air knife. The annular air knives can utilize the Coanda effect to divert air and form uniform 360-degree conical air flow rings. At an intersection of the cone, a wind speed can reach its maximum, thereby blocking the welding slag and blowing away the foreign objects.

In addition, the galvanometer welding mechanism is further provided with a galvanometer light source (the lighting assembly 5). The galvanometer light source can cooperate with the galvanometer to achieve laser point adjustment.

The above embodiments are merely intended to describe the technical solutions of the present disclosure, but not for limiting the present disclosure. Although the present disclosure is described in detail with reference to the foregoing embodiments, persons of ordinary skill in the art should understand that they may still make modifications to the technical solutions described in the foregoing embodiments or make equivalent replacements to partial or all technical features thereof. However, these modifications or replacements do not make the essence of the corresponding technical solutions depart from the scope of the technical solutions of the embodiments of the present disclosure and shall all fall within the scope of the present disclosure. In particular, the technical features mentioned in the embodiments can be combined in any manner if there is no structural conflict.

## Claims

1. A laser welding device, comprising:
a galvanometer assembly configured to emit a laser beam to perform laser welding on a workpiece in a welding area, wherein the galvanometer assembly comprises a protective lens; and
an air knife assembly located between the galvanometer assembly and the welding area, wherein the air knife assembly comprises a first air knife and a second air knife; an air outlet of the first air knife faces the welding area; and an air outlet of the second air knife faces the protective lens.

2. The laser welding device according to claim 1, wherein
the first air knife comprises a first annular air outlet facing the welding area; and
the second air knife comprises a second annular air outlet facing the protective lens.

3. The laser welding device according to claim 2, wherein
the first annular air outlet and the second annular air outlet are coaxially disposed in a first direction.

4. The laser welding device according to claim 2 or 3, wherein
the first air knife comprises a first annular portion; the first annular portion comprises a first cavity and a second cavity that are communicated with each other; a plurality of first partition plates are disposed within the second cavity; and the plurality of first partition plates divide the second cavity into a plurality of first air outlet channels.

5. The laser welding device according to claim 4, wherein
the plurality of first partition plates are spaced apart from each other and uniformly distributed in a circumferential direction of the second cavity.

6. The laser welding device according to claim 4 or 5, wherein
the plurality of first partition plates are disposed in a tilted manner in the same tilting direction.

7. The laser welding device according to claim 6, wherein
the plurality of first air outlet channels defined by the plurality of first partition plates that are disposed in the tilted manner in the same tilting direction tilt relative to tangential directions of edges of positions at which air outlets of the first air outlet channels are located.

8. The laser welding device according to any one of claims 4 to 7, wherein
a first air inlet is formed in one side of the first annular portion facing away from the welding area, and the first air inlet is communicated with the first cavity and the second cavity.

9. The laser welding device according to claim 8, wherein
a plurality of first air inlets are formed; and the plurality of first air inlets are spaced apart from each other in a circumferential direction of the first annular portion.

10. The laser welding device according to any one of claims 2 to 9, wherein
the second air knife comprises a second annular portion; the second annular portion comprises a third cavity and a fourth cavity that are communicated with each other; a plurality of second partition plates are disposed within the fourth cavity; and the plurality of second partition plates divide the fourth cavity into a plurality of second air outlet channels.

11. The laser welding device according to claim 10, wherein
the plurality of second partition plates are spaced apart from each other and uniformly distributed in a circumferential direction of the fourth cavity.

12. The laser welding device according to claim 10 or 11, wherein
the plurality of second partition plates are disposed in a tilted manner in the same tilting direction.

13. The laser welding device according to claim 12, wherein
the plurality of second air outlet channels defined by the plurality of second partition plates that are disposed in the tilted manner in the same tilting direction tilt relative to tangential directions of edges of positions at which air outlets of the second air outlet channels are located.

14. The laser welding device according to any one of claims 10 to 13, wherein
a second air inlet is formed in a peripheral side wall of the second annular portion, and the second air inlet is communicated with the third cavity and the fourth cavity.

15. The laser welding device according to claim 14, wherein
a plurality of second air inlets are formed; and the plurality of second air inlets are spaced apart from each other in a circumferential direction of the second annular portion.

16. The laser welding device according to any one of claims 1 to 15, wherein
the first air knife is circular-ring-shaped; and/or
the second air knife is circular-ring-shaped.

17. The laser welding device according to any one of claims 1 to 16, wherein
a flow rate of gas generated by the first air knife is greater than a flow rate of gas generated by the second air knife.

18. The laser welding device according to any one of claims 1 to 17, wherein
the laser welding device comprises at least one connection portion, and the connection portion is connected to the air knife assembly and the galvanometer assembly.

19. The laser welding device according to any one of claims 1 to 18, wherein
the laser welding device further comprises a lighting assembly, and the lighting assembly is connected to one side of the air knife assembly facing the welding area in the first direction.

20. A laser welding apparatus, comprising:
a positioning device configured to position a workpiece in a welding area; and
the laser welding device according to any one of claims 1 to 19, wherein the laser welding device performs laser welding on the workpiece positioned in the welding area.
